# EUROPEAN PATENT APPLICATION

(11) **EP 2 424 256 A2**
(43) Date of publication of application: **29.02.2012**
(21) Application number: 11006827.7
(22) Date of filing: 19.08.2011
(51) Int. Cl.: H04N 13/02

(54) **Method and system for generating three-dimensional video utilizing a monoscopic camera**

(30) Priority: 27.08.2010 US 377867 P; 03.02.2011 US 439193 P; 31.03.2011 US 77900
(71) Applicant: Broadcom Corporation, Irvine, CA 92617 (US)
(72) Inventor: Seshadri, Nambi, 92603 Irvine, CA (US); Chen, Xuemin, 92067-5000 Rancho Santa Fe, CA (US); Karaoguz, Jeyhan, 92606 Irvine, CA (US); Boross, Chris, 94086 Sunnyvale, CA (US)
(74) Representative: Jehle, Volker Armin

(57) **Abstract**

Aspects of a method and system for generating three-dimensional video utilizing a monoscopic camera are provided. A monoscopic camera may comprise one or more image sensors and one or more depth sensors. Two-dimensional image data may be captured via the image sensor(s) and depth information may be captured via the depth sensor(s). The depth sensor may utilize infrared waves transmitted by an emitter of the monoscopic camera. The monoscopic camera may be operable to utilize the captured depth information to generate a three-dimensional video stream from the captured two-dimensional image data. The monoscopic camera may be operable to synchronize the captured depth information with the captured two-dimensional image data. The monoscopic camera may be operable to generate a two-dimensional video stream from the captured two-dimensional image data. The monoscopic camera may be configurable to output the two-dimensional video stream and/or the three-dimensional video stream.

## Description

### CLAIM OF PRIORITY

This patent application makes reference to, claims priority to and claims benefit from United States Provisional Patent Application Serial No. 61/439,193 filed on 02/03/2011 and United States Provisional Patent Application Serial No. 61/377867 filed on 8/27/2010.

The above stated application is hereby incorporated herein by reference in its entirety.

### INCORPORATION BY REFERENCE

This patent application also makes reference to:
United States Patent Application Serial No. 61/439,274 filed on February 3, 2011;
United States Patent Application Serial No. _____ (Attorney Docket No. 23462US03) filed on March 31, 2011;
United States Patent Application Serial No. 61/439,283 filed on February 3, 2011;
United States Patent Application Serial No. _____ (Attorney Docket No. 23463US03) filed on March 31, 2011;
United States Patent Application Serial No. 61/439,130 filed on February 3, 2011;
United States Patent Application Serial No. _____ (Attorney Docket No. 23464US03) filed on March 31, 2011;
United States Patent Application Serial No. 61/439,290 filed on February 3, 2011;
United States Patent Application Serial No. _____ (Attorney Docket No. 23465US03) filed on March 31, 2011;
United States Patent Application Serial No. 61/439,119 filed on February 3, 2011;
United States Patent Application Serial No. _____ (Attorney Docket No. 23466US03) filed on March 31, 2011;
United States Patent Application Serial No. 61/439,297 filed on February 3, 2011;
United States Patent Application Serial No. _____ (Attorney Docket No. 23467US03) filed on March 31, 2011;
United States Patent Application Serial No. 61/439,201 filed on February 3, 2011;
United States Patent Application Serial No. 61/439,209 filed on February 3, 2011;
United States Patent Application Serial No. 61/439,113 filed on February 3, 2011;
United States Patent Application Serial No. _____ (Attorney Docket No. 23472US03) filed on March 31, 2011;
United States Patent Application Serial No. 61/439,103 filed on February 3, 2011;
United States Patent Application Serial No. _____ (Attorney Docket No. 23473US03) filed on March 31, 2011;
United States Patent Application Serial No. 61/439,083 filed on February 3, 2011;
United States Patent Application Serial No. _____ (Attorney Docket No. 23474US03) filed on March 31, 2011;
United States Patent Application Serial No. 61/439,301 filed on February 3, 2011; and
United States Patent Application Serial No. _____ (Attorney Docket No. 23475US03) filed on March 31, 2011.

Each of the above stated applications is hereby incorporated herein by reference in its entirety.

### FIELD OF THE INVENTION

Certain embodiments of the invention relate to video processing. More specifically, certain embodiments of the invention relate to a method and system for generating three-dimensional video utilizing a monoscopic camera.

### BACKGROUND OF THE INVENTION

Support and demand for video systems that support three-dimensional (3-D) video has increased rapidly in recent years. Both literally and physically, 3-D video provides a whole new way to watch video, in home and in theaters. However, 3-D video systems are still in their infancy in many ways and there is much room for improvement in terms of both cost and performance.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for generating three-dimensional video utilizing a monoscopic camera, substantially as illustrated by and/or described in connection with at least one of the figures, as set forth more completely in the claims.
According to an aspect of the invention, a method comprises:
capturing two-dimensional image data via one or more image sensors of a monoscopic camera;
capturing depth information via a depth sensor of said monoscopic camera; and
generating a three-dimensional video stream from said captured two-dimensional image data utilizing said captured depth information.
Advantageously, the method further comprises synchronizing said captured depth information with said captured two-dimensional image data.
Advantageously, the method further comprises scaling a resolution of said depth information to match a resolution of said two-dimensional image data.
Advantageously, the method further comprises adjusting a frame rate of said captured depth information to match a frame rate of said captured two-dimensional image data.
Advantageously, the method further comprises storing said captured depth information separately from said captured two-dimensional image data in memory.
Advantageously, said captured two-dimensional image data comprises one or both of brightness information and color information.
Advantageously, the method further comprises rendering a two-dimensional video stream from said captured two-dimensional image data.
Advantageously, said monoscopic camera is configurable to output one of said two-dimensional video stream and said three-dimensional video stream to a display of said monoscopic camera.
Advantageously, said monoscopic camera is configurable to output one or both of said two-dimensional video stream and said three-dimensional video stream to a one or more electronic devices coupled to said monoscopic camera via one or more interfaces.
Advantageously, said depth sensor utilizes infrared waves transmitted by an emitter of said monoscopic camera.
According to an aspect, a system comprises:
one or more circuits for use in a monoscopic camera, said one or more circuits comprising one or more image sensors and a depth sensor, and said one or more circuits being operable to:
   capture two-dimensional image data via one or more image sensors of a monoscopic camera;
   capture depth information via a depth sensor of said monoscopic camera; and
   generate a three-dimensional video stream from said captured two-dimensional image data utilizing said captured depth information.
Advantageously, said one or more circuits are operable to synchronize said captured depth information with said captured two-dimensional image data.
Advantageously, said one or more circuits are operable to scale a resolution of said depth information to match a resolution of said two-dimensional image data.
Advantageously, said one or more circuits are operable to adjust a frame rate of said captured depth information to match a frame rate of said captured two-dimensional image data.
Advantageously, said one or more circuits are operable to store said captured depth information separately from said captured two-dimensional image data in memory.
Advantageously, said captured two-dimensional image data comprises one or both of brightness information and color information.
Advantageously, said one or more circuits are operable to render a two-dimensional video stream from said captured two-dimensional image data.
Advantageously, said monoscopic camera is configurable to output one of said two-dimensional video stream and said three-dimensional video stream to a display of said monoscopic camera.
Advantageously, said monoscopic camera is configurable to output one or both of said two-dimensional video stream and said three-dimensional video stream to a one or more electronic devices coupled to said monoscopic camera via one or more interfaces.
Advantageously, said depth sensor utilizes infrared waves transmitted by an emitter of said monoscopic camera.

These and other advantages, aspects and novel features of the present invention, as well as details of an illustrated embodiment thereof, will be more fully understood from the following description and drawings.

### BRIEF DESCRIPTION OF THE DRAWINGS

FIG. 1 is a diagram that illustrates an exemplary monoscopic, or single-view, camera embodying aspects of the present invention, compared with a conventional stereoscopic camera.

FIG. 2 is a diagram illustrating an exemplary monoscopic camera, in accordance with an embodiment of the invention.

FIG. 3 is a diagram that illustrates exemplary processing of depth information and 2-D image information to generate a 3-D image, in accordance with an embodiment of the invention.

FIG. 4 is a flow diagram illustrating exemplary steps for creating 3-D video utilizing a 2-D image sensor and a depth sensor, in accordance with an embodiment of the invention.

### DETAILED DESCRIPTION OF THE INVENTION

Certain embodiments of the invention may be found in a method and system for generating three-dimensional video utilizing a monoscopic camera. In various embodiments of the invention, a monoscopic camera may comprise one or more image sensors and one or more depth sensors. Two-dimensional image data may be captured via the image sensor(s) and depth information may be captured via the depth sensor(s). The depth sensor may utilize infrared waves transmitted by an emitter of the monoscopic camera. The monoscopic camera may be operable to utilize the captured depth information to generate a three-dimensional video stream from the captured two-dimensional image data. The monoscopic camera may be operable to synchronize the captured depth information with the captured two-dimensional image data. The monoscopic camera may be operable to scale a resolution of the depth information to match a resolution of the two-dimensional image data and/or adjust a frame rate of the captured depth information to match a frame rate of the captured two-dimensional image data. The monoscopic camera may be operable to store, in memory, the captured depth information separately from the captured two-dimensional image data. In this manner, the image data and the depth data may be utilized separately and/or in combination for rendering one or more video streams. The captured two-dimensional image data may comprise one or both of brightness information and color information. The monoscopic camera may be operable to render a two-dimensional video stream from the captured two-dimensional image data. The monoscopic camera may be configurable to output one or both of the two-dimensional video stream and the three-dimensional video stream to a display of the monoscopic camera and/or to one or more electronic devices coupled to the monoscopic camera via one or more interfaces. As utilized herein a "3-D image" refers to a stereoscopic image and "3-D video" refers to stereoscopic video.

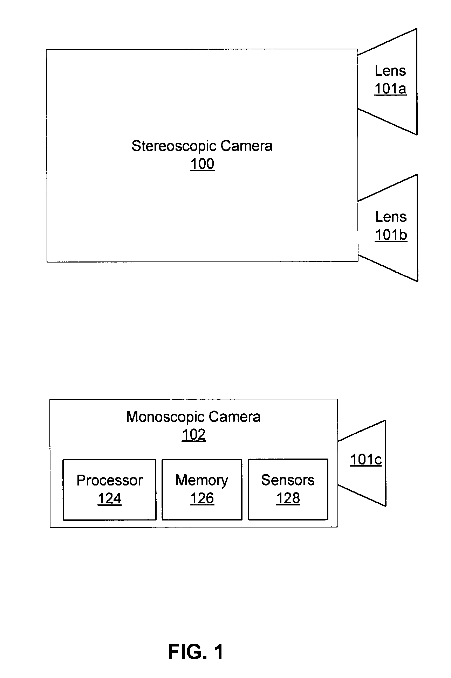

FIG. 1 is a diagram that compares a monoscopic camera embodying aspects of the present invention with a conventional stereoscopic camera. Referring to FIG. 1, the stereoscopic camera 100 may comprise two lenses 101 a and 101 b. Each of the lenses 101a and 101b may capture images from a different viewpoint and images captured via the two lenses 101 a and 101 b may be combined to generate a 3-D image. In this regard, electromagnetic (EM) waves in the visible spectrum may be focused on a first one or more image sensors by the lens 101 a (and associated optics) and EM waves in the visible spectrum may be focused on a second one or more image sensors by the lens (and associated optics) 101 b.

The monoscopic camera 102 may capture images via a single viewpoint corresponding to the lens 101c. In this regard, EM waves in the visible spectrum may be focused on one or more image sensors by the lens 101 c. The image sensor(s) may capture brightness and/or color information. The captured brightness and/or color information may be represented in any suitable color space such as YCrCb color space or RGB color space. The monoscopic camera 102 may also capture depth information via the lens 101 c (and associated optics). For example, the monoscopic camera 102 may comprise an infrared emitter, an infrared sensor, and associated circuitry operable to determine the distance to objects based on reflected infrared waves. Additional details of the monoscopic camera 102 are described below.

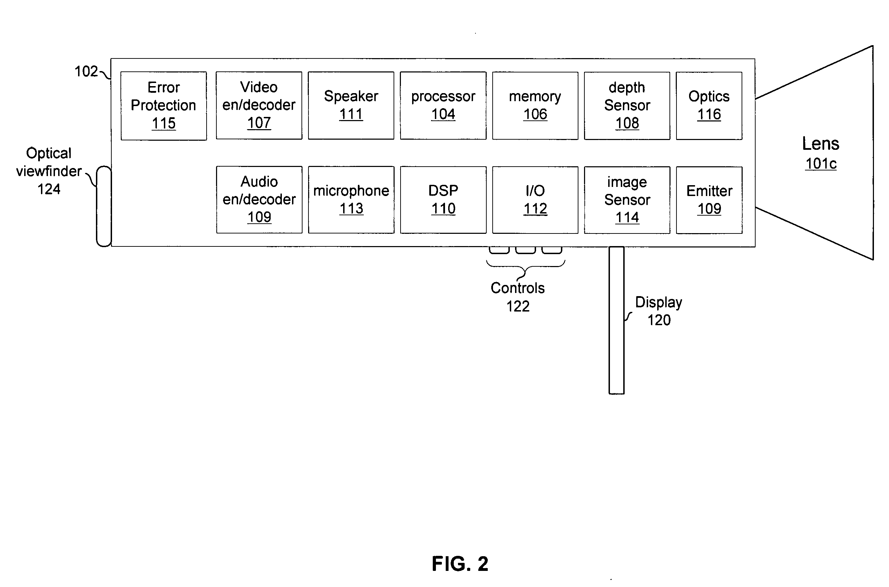

The monoscopic camera may comprise a processor 124, a memory 126, and one or more sensors 128. The processor 124 may comprise suitable logic, circuitry, interfaces, and/or code that may be operable to manage operation of various components of the camera and perform various computing and processing tasks. A single processor 124 is utilized only for illustration but the invention is not so limited. In an exemplary embodiment of the invention, various portions of the camera 102 depicted in FIG. 2 below may correspond to the processor 124 depicted in FIG. 1. The memory 106 may comprise, for example, DRAM, SRAM, flash memory, a hard drive or other magnetic storage, or any other suitable memory devices. The sensors 128 may comprise one or more image sensors, one or more depth sensors, and one or more microphones. Exemplary sensors are described below with respect to FiG. 2.

FIG. 2 is a diagram illustrating an exemplary monoscopic camera, in accordance with an embodiment of the invention. Referring to FIG. 2, the camera 102 may comprise a processor 104, memory 106, video encoder/decoder 107, depth sensor 108, audio encoder/decoder 109, digital signal processor (DSP) 110, input/output module 112, one or more image sensors 114, optics 116, lens 118, a digital display 120, controls 122, and optical viewfinder 124.

The processor 104 may comprise suitable logic, circuitry, interfaces, and/or code that may be operable to coordinate operation of the various components of the camera 102. The processor 104 may, for example, run an operating system of the camera 102 and control communication of information and signals between components of the camera 102. The processor 104 may execute instructions stored in the memory 106.

The memory 106 may comprise, for example, DRAM, SRAM, flash memory, a hard drive or other magnetic storage, or any other suitable memory devices. For example, SRAM may be utilized to store data utilized and/or generated by the processor 104 and a hard-drive and/or flash memory may be utilized to store recorded image data and depth data.

The video encoder/decoder 107 may comprise suitable logic, circuitry, interfaces, and/or code that may be operable to process captured color, brightness, and/or depth data to make the data suitable for conveyance to, for example, the display 120 and/or to one or more external devices via the I/O block 114. For example, the video encoder/decoder 107 may convert between, for example, raw RGB or YCrCb pixel values and an MPEG encoding. Although depicted as a separate block 107, the video encoder/decoder 107 may be implemented in the DSP 110.

The depth sensor 108 may comprise suitable logic, circuitry, interfaces, and/or code that may be operable to detect EM waves in the infrared spectrum and determine distance to objects based on reflected infrared waves. In an embodiment of the invention, distance may be determined based on time-of-flight of infrared waves transmitted by the emitter 109 and reflected back to the sensor 108. In an embodiment of the invention, depth may be determined based on distortion of a captured grid.

The audio encoder/decoder 109 may comprise suitable logic, circuitry, interfaces, and/or code that may be operable to process captured color, brightness, and/or depth data to make the data suitable for conveyance to, for example, the speaker 111 and/or to one or more external devices via the I/O block 114. For example, the video encoder/decoder 107 may convert between, for example, raw pulse-code-modulated audio and an MP3 or AAC encoding. Although depicted as a separate blok 109, the audio encoder/decoder 109 may be implemented in the DSP 110.

The digital signal processor (DSP) 110 may comprise suitable logic, circuitry, interfaces, and/or code that may be operable to perform complex processing of captured image data, captured depth data, and captured audio data. The DSP 110 may be operable to, for example, compress and/or decompress the data, encode and/or decode the data, and/or filter the data to remove noise and/or otherwise improve perceived audio and/or video quality for a listener and/or viewer.

The input/output module 112 may comprise suitable logic, circuitry, interfaces, and/or code that may enable the camera 102 to interface with other devices in accordance with one or more standards such as USB, PCI-X, IEEE 1394, HDMI, DisplayPort, and/or analog audio and/or analog video standards. For example, the I/O module 112 may be operable to send and receive signals from the controls 122, output video to the display 120, output audio to a speaker 111, handle audio input from the microphone 113, read from and write to cassettes, flash cards, hard disk drives, solid state drives, or other external memory attached to the camera 102, and/or output audio and/or video via one or more ports such as a IEEE 1394 or USB port.

The microphone 113 may comprise a transducer and associated logic, circuitry, interfaces, and/or code operable to convert acoustic waves into electrical signals. The microphone 113 may be operable to amplify, equalize, and/or otherwise process captured audio signals. The directionality of the microphone 113 may be controlled electronically and/or mechanically.

The image sensor(s) 114 may each comprise suitable logic, circuitry, interfaces, and/or code that may be operable to convert optical signals to electrical signals. Each image sensor 114 may comprise, for example, a charge coupled device (CCD) images sensor or a complimentary metal oxide semiconductor (CMOS) image sensor. Each image sensor 114 may capture 2-D brightness and/or color information.

The optics 116 may comprise various optical devices for conditioning and directing EM waves received via the lens 101 c. The optics 116 may direct EM waves in the visible spectrum to the image sensor 114 and direct EM waves in the infrared spectrum to the depth sensor 108. The optics 116 may comprise, for example, one or more lenses, prisms, color filters, and/or mirrors.

The lens 118 may be operable to collect and sufficiently focus electromagnetic waves in the visible and infrared spectra.

The digital display 120 may comprise an LCD, LED, OLED, or other digital display technology on which images recorded via the camera 102 may be displayed. In an embodiment of the invention, the digital display 120 may be operable to display 3-D images.

The controls 122 may comprise suitable logic, circuitry, interfaces, and/or code. The controls 122 may enable a user to interact with the camera 102. For example, controls for controlling recording and playback. In an embodiment of the invention, the controls 122 may enable a user to select whether the camera 102 records and/or outputs video in 2-D or 3-D modes.

The optical viewfinder 124 may enable a user to see what the lens 101c "sees," that is, what is "in frame."

In operation, the depth sensor 108 may capture depth information and the image sensor(s) 114 may capture 2-D image information. Similarly, for a lower-end application of the camera 102, such as a security camera, the image sensor(s) 114 may capture only brightness information for rendering black and white 3-D video. The depth information may, for example, be stored and/or communicated as metadata and/or an additional layer of information associated with 2-D image information. In this regard, a data structure in which the 2-D image information is stored may comprise one or more fields and/or indications that indicate depth data associated with the stored 2-D image information is available for rendering a 3-D image. Similarly, packets in which the 2-D image information is communicated may comprise one or more fields and/or indications that indicate depth data associated with the communicated 2-D image information is available for rendering a 3-D image. Thus, for outputting 2-D video, the camera 101 may read the 2-D image information out of memory, and process it to generate a 2-D video stream to the display and/or the I/O block. For outputting 3-D video, may: (1) read the 2-D image information from memory; (2) determine, based on an indication stored in memory with the 2-D image information, that associated depth information is available; (3) read the depth information from memory; and (4) process the 2-D image information and depth information to generate a 3-D video stream.

Processing of the 2-D image information and depth information may comprise synchronizing the depth information to the 2-D image information. Processing of the 2-D image information and depth information may comprise scaling and/or interpolating either or both of the 2-D image information and the associated depth information. For example, the resolution of the depth sensor 108 may be less than the resolution of the image sensor 114. Accordingly, the camera 102 may be operable to interpolate between pixels of depth information to generate depth information for each pixel, or group of pixels, of 2-D image information. Similarly, the frame rate of the depth sensor 108 may be less than the frame rate of the image sensor 114. Accordingly, the camera 102 may be operable to interpolate between frames of depth information to generate a frame of depth information for each frame of 2-D image information.

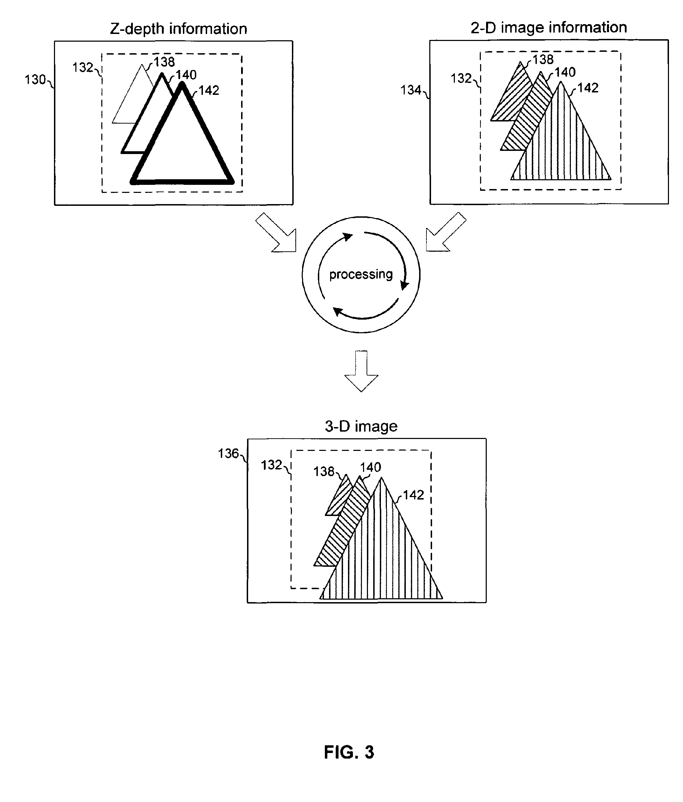

FIG. 3 illustrates processing of depth information and 2D image information to generate a 3-D image, in accordance with an embodiment of the invention. Referring to FIG. 3 the frame of depth information 130, captured by the depth sensor(s) 108, and the frame of 2D image information 134, captured by the image sensors 114, may be processed to generate a frame 136 of a 3-D image. The plane 132, indicated by a dashed line, is merely for illustration purposes to indicate depth on the two dimensional drawing sheets.

In the frame 130, the line weight is used to indicate depth - heavier lines being closer to the viewer. Thus, the object 138 is farthest from the camera 102, the object 142 is closest to the camera 102 and the object 104 is at an intermediate distance. In various embodiments of the invention, depth information may be mapped to a grayscale, or pseudo-grayscale, image for display to a viewer. Such mapping may be performed, for example, by the DSP 110.

The image in the frame 134 is a conventional 2D image. A viewer of the frame 134, for example, on the display 120 or on a device connected to the camera 102 via the I/O module 112, perceives the same distance between himself and each of the objects 138, 140, and 142. That is, each of the objects 138, 140, and 142 each appear to reside on the plane 132.

The image in the frame 136 is a 3-D image. A viewer of the frame 136, for example, on the display 120 or on a device connected to the camera 102 via the I/O module 112, perceives the object 138 being furthest from him the object 142 being closest to him, and the object 140 being at an intermediate distance. In this regard, the object 138 appears to be behind the reference plane, the object 140 appears to be on the reference plane, and the object 142 appears to be in front of the reference plane.

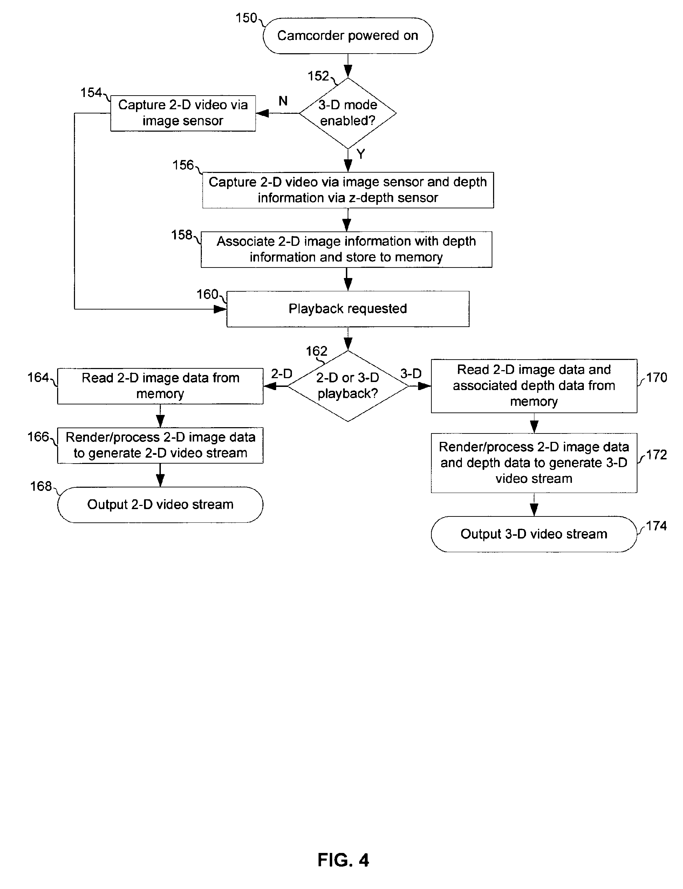

FIG. 4 is a flow diagram illustrating exemplary steps for creating 3-D video utilizing a 2-D image sensor and a depth sensor, in accordance with an embodiment of the invention. Referring to FIG. 4, the exemplary steps begin with step 150 in which the camera 102 may be powered on. In step 152, it is determined whether 3-D mode is enabled. If not, then in step 154 the camera 102 may capture 2-D images and/or videos.

Returning to step 152, if 3-D mode is enabled (e.g., based on user selection), then in step 156, the camera 102 may capture 2-D image information (brightness information and/or color information) via the sensor(s) 114 and depth information via the sensor 108. In step 158, the depth information may be associated with the corresponding 2-D image information. This association may comprise, for example, synchronizing the 2-D image information and the depth information and associating the 2-D image information and the depth information in memory 106.

In step 160, playback of the captured video may be requested. In step 162, it may be determined whether the camera 102 is in a 2-D video or 3-D video playback mode. For 2-D playback mode, the exemplary steps may advance to step 164. In step 164, the 2-D image information may be read from memory 106. In step 166, the camera 102 may render and/or otherwise process the 2-D image information to generate a 2-D video stream. In step 168 the 2-D video stream may be output to the display 120 and/or to an external device via the I/O block 112.

Returning to step 162, for 2-D playback mode, the exemplary steps may advance to step 170. In step 170, the 2-D image information and the associated depth information may be read from memory 106. In step 172, the camera 102 may render and/or otherwise process the 2-D image information and depth information to generate a 3-D video stream. In step 174 the 3-D video stream may be output to the display 120 and/or to an external device via the I/O block 112.

Various aspects of a method and system for generating 3-D video utilizing a monoscopic camera are provided. In various embodiments of the invention, a monoscopic camera 102 may comprise one or more image sensors 114 and one or more depth sensors 108. Two-dimensional image data may be captured via the image sensor(s) 114 and depth information may be captured via the depth sensor(s) 108. The depth sensor(s) 108 may utilize infrared waves transmitted by an emitter 109 of the monoscopic camera. The monoscopic camera 102 may be operable to utilize the captured depth information to generate a three-dimensional video stream from the captured two-dimensional image data. The monoscopic camera 102 may be operable to synchronize the captured depth information with the captured two-dimensional image data. The monoscopic camera 102 may be operable to scale a resolution of the depth information to match a resolution of the captured two-dimensional image data. The monoscopic camera 102 may be operable to adjust a frame rate of the captured depth information to match a frame rate of the captured two-dimensional video. The monoscopic camera 102 may be operable to store, in memory 106, the captured depth information separately from the captured two-dimensional video. In this manner, the image data and the depth data may be utilized separately and/or in combination for rendering one or more video streams. The captured two-dimensional image data may comprise one or both of brightness information and color information. The monoscopic camera 102 may be operable to render a two-dimensional video stream from the captured two-dimensional image data. The monoscopic camera 102 may be configurable to output one or both of the two-dimensional video stream and the three-dimensional video stream to a display 120 of the monoscopic camera 102 and/or to one or more electronic devices coupled to the monoscopic camera 102 via one or more interfaces of the I/O block 112.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for generating three-dimensional video utilizing a monoscopic camera.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method comprising:
capturing two-dimensional image data via one or more image sensors of a monoscopic camera;
capturing depth information via a depth sensor of said monoscopic camera; and
generating a three-dimensional video stream from said captured two-dimensional image data utilizing said captured depth information.

2. The method according to claim 1, comprising synchronizing said captured depth information with said captured two-dimensional image data.

3. The method according to claim 1, comprising scaling a resolution of said depth information to match a resolution of said two-dimensional image data.

4. The method according to claim 1, comprising adjusting a frame rate of said captured depth information to match a frame rate of said captured two-dimensional image data.

5. The method according to claim 1,comprising storing said captured depth information separately from said captured two-dimensional image data in memory.

6. The method according to claim 1, wherein said captured two-dimensional image data comprises one or both of brightness information and color information.

7. The method according to claim 1, comprising rendering a two-dimensional video stream from said captured two-dimensional image data.

8. The method according to claim 7, wherein said monoscopic camera is configurable to output one of said two-dimensional video stream and said three-dimensional video stream to a display of said monoscopic camera.

9. The method according to claim 7, wherein said monoscopic camera is configurable to output one or both of said two-dimensional video stream and said three-dimensional video stream to a one or more electronic devices coupled to said monoscopic camera via one or more interfaces.

10. The method according to claim 1, wherein said depth sensor utilizes infrared waves transmitted by an emitter of said monoscopic camera.

11. A system comprising:
one or more circuits for use in a monoscopic camera, said one or more circuits comprising one or more image sensors and a depth sensor, and said one or more circuits being operable to:
capture two-dimensional image data via one or more image sensors of a monoscopic camera;
capture depth information via a depth sensor of said monoscopic camera; and
generate a three-dimensional video stream from said captured two-dimensional image data utilizing said captured depth information.

12. The system according to claim 11, wherein said one or more circuits are operable to synchronize said captured depth information with said captured two-dimensional image data.

13. The system according to claim 11, wherein said one or more circuits are operable to scale a resolution of said depth information to match a resolution of said two-dimensional image data.

14. The system according to claim 11, wherein said one or more circuits are operable to adjust a frame rate of said captured depth information to match a frame rate of said captured two-dimensional image data.

15. The system according to claim 11, wherein said one or more circuits are operable to store said captured depth information separately from said captured two-dimensional image data in memory.
